# EUROPEAN PATENT APPLICATION

(11) **EP 1 445 771 A1**
(43) Date of publication of application: **11.08.2004**
(21) Application number: 01978895.9
(22) Date of filing: 24.10.2001
(51) Int. Cl.: G11B 17/28

(54) **DISK DRIVE**

(71) Applicant: MITSUBISHI DENKI KABUSHIKI KAISHA, Tokyo 100-8310 (JP)
(72) Inventor: TATEHATA, Shoji, MITSUBISHI DENKI K. K., Tokyo 100-8310 (JP); SHIRAHATA, Kei, MITSUBISHI DENKI KABUSHIKI KAISHA, Tokyo 100-8310 (JP); TANIGUCHI, Kazutoshi, MITSUBISHI DENKI K.K., Tokyo100-8310 (JP); KUZUU, Takashi, MITSUBISHI DENKI K.K., Tokyo 100-8310 (JP); SASAKI, Eiji, MITSUBISHI DENKI KABUSHIKI KAISHA, Tokyo 100-8310 (JP); NAGAMI, Tetsurou, MITSUBISHI DENKI ENG. K.K., Tokyo 100-0004 (JP); MUROTANI, Kiichiro, MITSUBISHI DENKI ENG. K.K., Tokyo 100-0004 (JP); MORITA, Hisashi, MITSUBISHI DENKI ENG. K.K., Tokyo 100-0004 (JP); WATANABE, Nao, MITSUBISHI DENKI KABUSHIKI KAISHA, Tokyo 100-8310 (JP); INATANI, Takeshi, MITSUBISHI DENKI K.K., Tokyo 100-8310 (JP); TAKESHIMA, Masaaki, MITSUBISHI DENKI K.K., Tokyo 100-8310 (JP); NIIKURA, Eiji, MITSUBISHI DENKI KABUSHIKI KAISHA, Tokyo 100-8310 (JP)
(74) Representative: Pfenning, Meinig & Partner GbR
(86) International application number: PCT/JP2001/009350
(87) International publication number: WO 2003/036638

(57) **Abstract**

A disk device constituted that a disk attitude stabilizing mechanism 16 to rotate a disk 11 when a front arm 14 or a rear arm 15 fail to grip the disk 11 and to retry a griping operation of the disk 11, is included.

## Description

### TECHNICAL FIELD

The present invention relates to a disk device in which an arbitrary disk stored in the disk device is selected and it is reproduced by the disk device.

### BACKGROUND ART

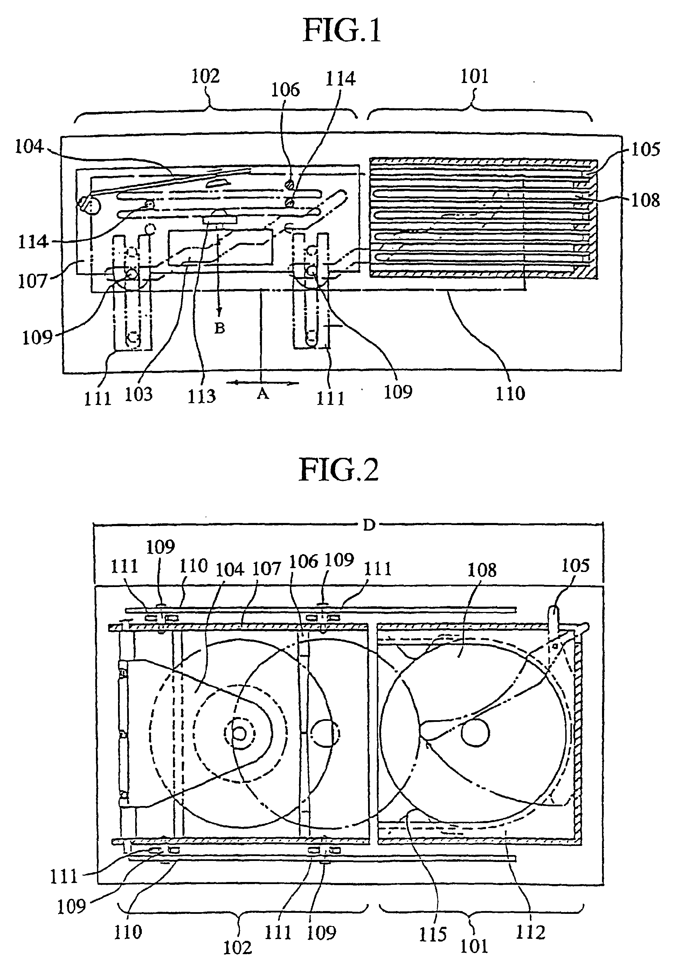

Fig. 1 is a cross sectional side view to show relevant part of a generic disk device in the prior art in which a plurality of disks are selectably operated and Fig. 2 is a cross sectional plan view of it.

In Fig. 1 and Fig. 2 a reference numeral 101 designates a magazine in which replacing disks are stored, 102 designates a disk rotation driving unit and the disk rotation driving unit 102 is composed of a disk rotating motor 103, a disk clamping hub 113 which is set on a driving shaft of the disk rotating motor 103, a disk clamper 104, a disk roller 106 which is set in the magazine 101, a driving shaft 109 which is fixed on a housing 107 supporting the disk rotation driving unit 102, an inclined plate cam 110 to be operated in A direction of the drawing by a driving means and an upper and lower guiding plates 111. A disk 108 is sent by a driving lever 105 which is driven by a driving means (not shown) and it is discharged by the disk roller 108 to the disk rotation driving unit 102.

In this disk device when a plurality of disks 108 stored in the magazine 101 are introduced, it is made that the driving shaft 109, the inclined plate cam 110 and the upper and lower guiding plate 111 works with respectively to move the disk rotation driving unit 102 in B direction of the drawing, thereby the disk is positioned in a predetermined desired disk position in the magazine 101.

As described above because the disk device in the prior art is made up in a state that disks stored in the magazine 101 and a disk which is rotated in the disk rotation driving unit 102 side are perfectly independent in a plane area, it causes a problem that a length of disk device in other words a dimension shown by a symbol D in the drawing becomes large.

To solve the above described problem a disk device is proposed, for example, disclosed in Japanese Laid Open Patent Sho 63-200354, which is shown in Fig. 3, Fig. 4 and Fig. 5. Fig. 3 and Fig. 4 are cross sectional side view when viewed from a side and Fig. 5 is a cross sectional plan view to show a relevant part of the disk device when viewed from a top.

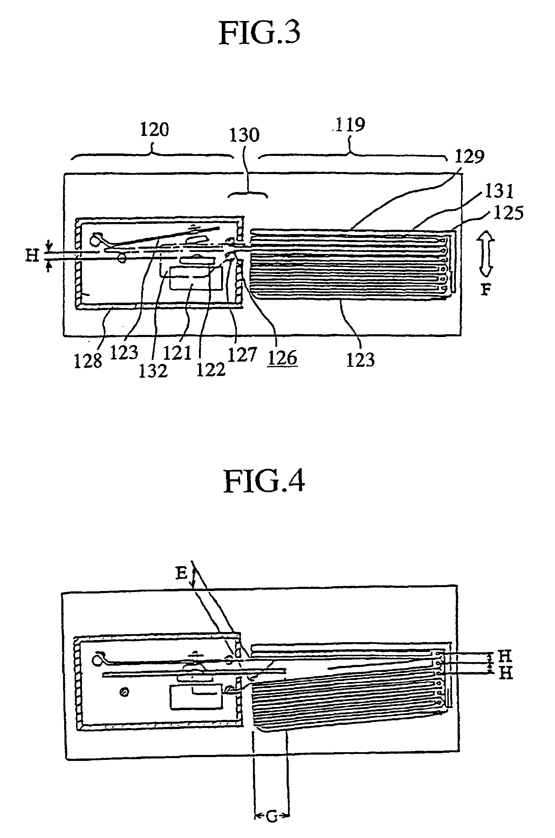

In Fig. 3, Fig. 4 and Fig. 5 a reference numeral 119 designates a magazine in which replacing disks are stored, 121 designates a disk rotating motor, 122 designates a disk clamping hub which is set on a shaft of the disk rotating motor 121, and 123 designates a disk clamper.

A reference numeral 126 designates a disk roller, and 127 designates a follower roller 126 which opposes to the disk roller 126. A disk 125 is sent by a driving lever 124 which is driven by a driving means (not shown) and is discharged by the disk roller 126 to the disk rotation driving unit.

A reference numeral 132 designates a pair of inclined plate cam which engages with a plurality of trays 131 in the magazine 119 to operate to disk rotation driving unit 120 such that a space E which is at least wider than a disk thickness is made along a rotating axis of the disk 125 that is selected by a magazine relocating means (not shown).

At this moment the disk rotation driving unit 120 is composed of a disk rotating motor 121, a disk clamping hub 122, a disk clamper 123, a driving lever 124, a disk 125, a disk roller 126, a follower roller 127 and an inclined plate cam 132.

Hereinafter an operation of the disk device will be explained.

When any one of disk is introduced from the plurality of disks 125 stored in the magazine 119, the magazine 119 is moved in F direction of the drawing by a driving means and it is positioned at a predetermined desired position in the magazine 119.

And the driving lever 124 in the magazine 119 is operated for the disk 125 to slide on a disk guiding portion 135 in the magazine, for a tip portion of the disk 125 to be bit into a space between the follower roller 127 and the disk roller 126 on disk rotation driving portion 120 for the disk to be carried to a position of the disk clamper 123 and the disk clamping hub 122 which is set on an axis of the disk rotating motor 121 by rotation of the disk roller 126. Then by a disk detecting means (not shown) a clamping position of the disk 125 is checked, the disk clamper 123, the disk roller 126 and the follower roller 127 are moved by a driving means in a direction of the disk clamping hub 122 to clamp the disk 125.

At the same time when the follower roller 127 moves in the direction of disk clamping hub 122, it is made that the pair of inclined plate cam 132 which are made on the disk rotation driving unit 120, move in the magazine 119 side for the trays 131 to be inclined such that an appropriate space E is prepared.

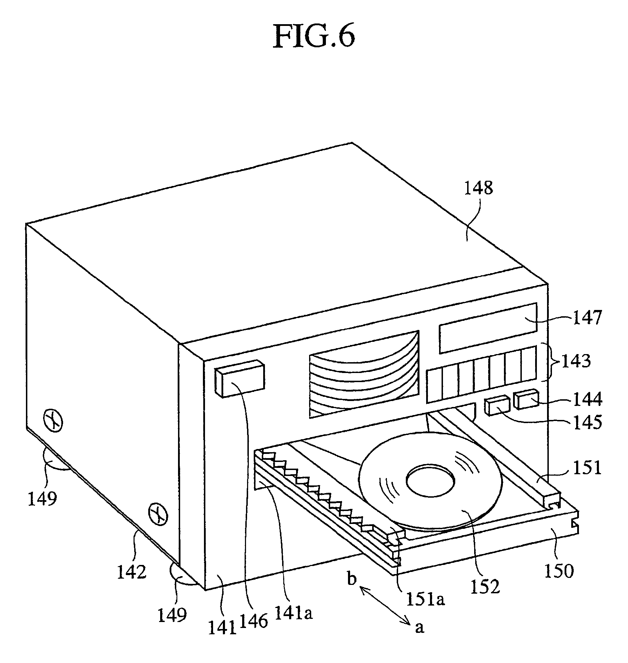

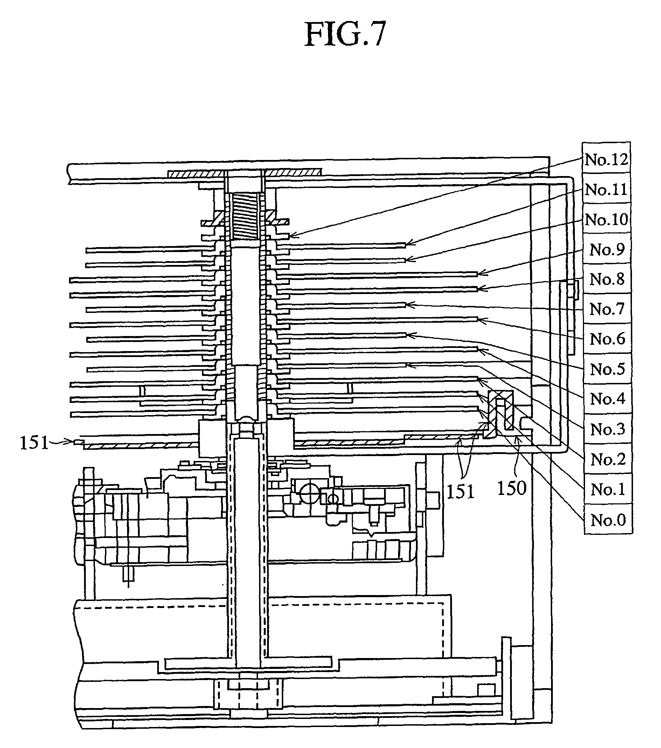

As one example of a disk drive having a mechanism in which disks are stored (in-dash type disk device), it is disclosed in, for example, Japanese Laid Open Patent Hei 10-208361 which is illustrated in Fig. 6 that is a perspective view to show a whole structure and Fig. 7 that is a cross sectional side view to show a relevant part of inner structure of the disk device.

In Fig. 6 reference numeral 141 designates a front panel which is fixed on a bottom plate 142 and at a front side of the front panel 141 various operating units 143 - 146, display unit 147 and so on are arranged. A reference numeral 148 designates a packaging case to cover a disk changer, 149 designates an insulator which is arranged on the bottom plate 142. A reference numeral 150 designates a main tray which is reciprocally protruding from an opening 141a of the front panel 141. A reference numeral 151 designates a sub tray which is guided by the main tray 150 to slide along a - b direction of the drawing, on the sub tray 151 an exchanged disk 152 is supplied.

Fig. 7 shows a relevant part of inside of the device. The disk device is composed such that a group of spacers which are supported by the disk holding means, are driven by a vertical driving means, an arbitrary disk is selected from a group of disks and the selected disk is carried to a recording - reproducing position by a horizontal driving means. And at the same time it is made to prevent that the disk drops from the spacers on the both spindles by a lifting reset means, to prevent that the disk removes from the spacers by a disk pressing means, and to prevent that spacers break away from a lower spindle by a spacer breaking away preventing means.

Because the disk device in the prior art is composed as described above, it causes problems as described below. In a case for not the in-dash type disk device a single disk cannot be selectively inserted and removed one at a time and the whole disk device becomes larger because the magazine case is required. And because a portable type magazine is used, it is technically difficult to disassemble the respective storing shelves in which the disks are stored, in the disk device. When a space between the reproducing disk and an opposing disk is taken for reproducing the disk, because only one end can be opened, a vacant space equal to the whole space must be made inside of the disk device when the space is widened and thereby the disk also becomes large.

And because the portable type magazine is used, it is quite difficult that the respective storing shelves are divided within the disk device with an inclination in every shelf in which disks are stored.

On the other hand as for the in-dash type disk device in the prior art, because the disk device is constituted such that the disk is held and carried only by a rotating force of the roller as a disk carrying means from a loading slot of the disk till the disk arrives at a holding position when the disk is held within the disk device, it causes problems that the disk is apt to be unstable during it is carried and in the worst case the disk abuts with members within the disk device and having a damage.

Also in the in-dash type disk device because the disk device is constituted such that the disk is held and fixed by a claw portion which is formed at an outer peripheral portion of a disk holding means sliding within an axis unit, and which is protruded from holes made at predetermined part of the axis unit, after an upper axis unit which is set at an upper portion of the device and a lower axis unit which is set at a lower portion of the device, are jointed together when the disk stored in the device is exchanged or the disk is reproduced, to support disk, in other words, to fix a spacer for supporting the disk, the claw portion must be protruded from and dragged in the axis unit every time when the disk is stored / exchanged or reproduced, it causes a problem that it takes too much time to operate.

Further in the in-dash type disk device in the prior art, though spacers are arranged to intervene between the respective disks, because they are not made to hold the disk, disk is apt to be unstable and the disk leans thereby it abuts with other disks and has been damaged when vibration and the like are applied to the disk device.

Moreover in the disk device in the prior art because it is necessary that complicated switch mechanism is prepared to detect and judge an operating state of the disk, thereby number of parts such as link mechanism and the like are increased and productivity in assembling process is reduced, it causes a problem of cost increasing.

The present invention has been made to solve the above described problems and it is an object of the present invention to provide a disk device which is constituted such that a plurality of disks are stored and respectively operated without detachable magazine, in other words, the respective disks are selectively carried in, carried out, reproduced and so on and at the same time a miniaturization of the disk device can be realized.

Also it is another object of the present invention to provide a disk device in which a prevention of damage on disk can be realized by means that a plurality of parts in a disk support means support a disk at respective portions when the disk is carried in and carried out.

Further it is other object of the present invention to provide a disk device by which a disk can be surely gripped even when a disk whose surface is deformed is loaded.

### DISCLOSURE OF THE INVENTION

The disk device in accordance with the present invention includes a rotating mechanism which rotates a disk when a disk holding mechanism fails to hold the disk and retries a holding operation of the disk.

By this arrangement an effect can be produced an effect that the disk is surely held even when the disk is deformed at its surface and miniaturization of the disk device can be realized without having a damage on the disk.

In the disk device in accordance with the present invention a disk is rotated in a predetermined angle.

By this arrangement an effect can be produced that the disk is held at different position from the previous holding operation.

In the disk device in accordance with the present invention a rotating operation is continuously achieved until a disk holding mechanism succeeds to hold a disk.

By this arrangement an effect can be produced that a possibility to succeed holding the disk is raised.

The disk device in accordance with the present invention includes a disk holding mechanism which shifts a disk holding position when the disk holding mechanism fails to hold the disk and retries a holding operation of the disk.

By this arrangement an effect can be produced that the disk is held surely even when the disk is deformed at its surface.

In the disk device in accordance with the present invention the movement regulating member makes the clamper to begin clamping the disk after the supporting member and the reproducing base engage together.

By this arrangement an effect can be produced that the clamper applies a clamping force before the supporting member holds the reproducing base, is prevented.

In the disk device in accordance with the present invention a disk is shifted in a predetermined amount.

By this arrangement an effect can be produced that the disk is held at different position from the previous holding operation.

In the disk device in accordance with the present invention a shifting operation is continuously achieved until a disk holding mechanism succeeds to hold a disk.

By this arrangement an effect can be produced that a possibility to succeed holding the disk is raised.

### BRIEF DESCRIPTION OF THE DRAWINGS

Fig. 1 is a cross sectional side view to show relevant part of a disk device in the prior art.
Fig. 2 is a cross sectional plan view to show a relevant part of a disk device.
Fig. 3 is a cross sectional side view to show relevant part of another disk device in the prior art.
Fig. 4 is a cross sectional side view when a portion of the disk device is operating.

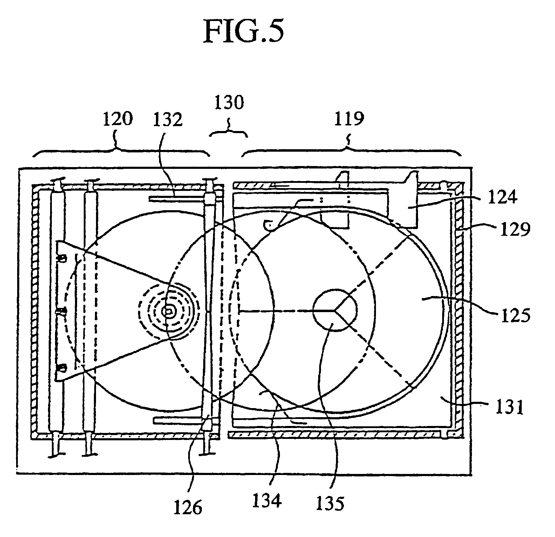

Fig. 5 is a cross sectional plan view to show a relevant part of a disk device when viewed from top.
Fig. 6 is a perspective view to show a whole structure of other disk device in the prior art.
Fig. 7 is a cross sectional side view to show a relevant part of the disk device.

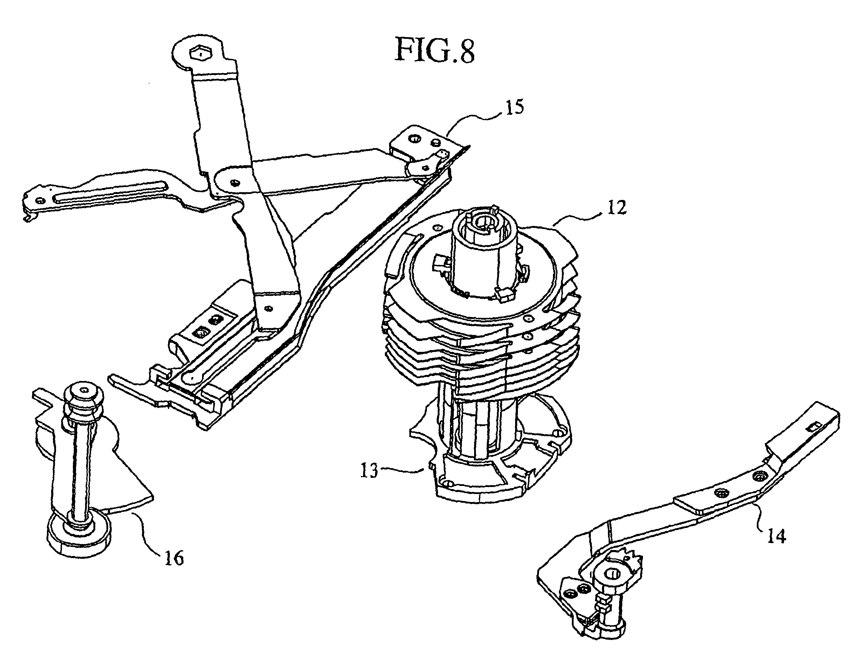

Fig. 8 is a perspective view to show a disk device in accordance with Embodiment 1 of the present invention.

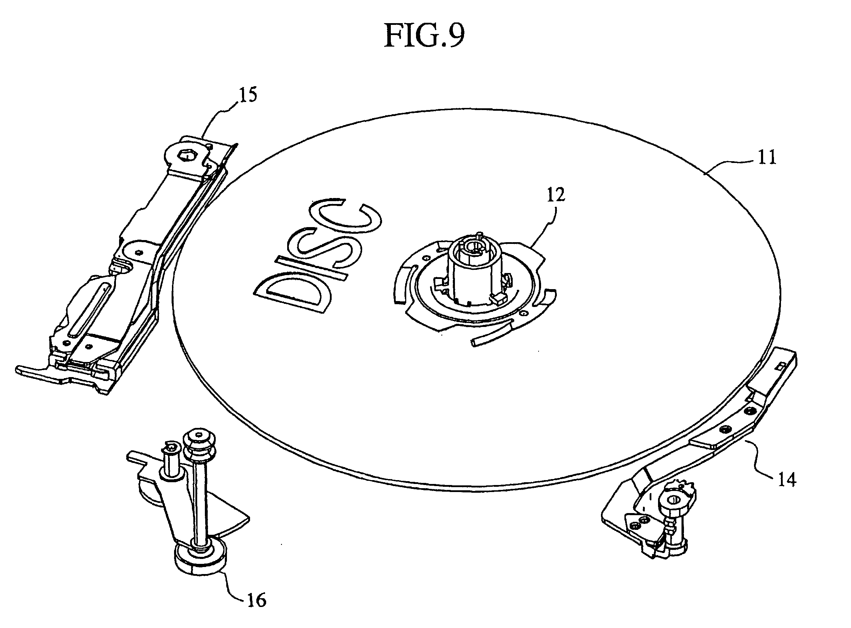

Fig. 9 is a perspective view to show a disk device in accordance with Embodiment 1 of the present invention.

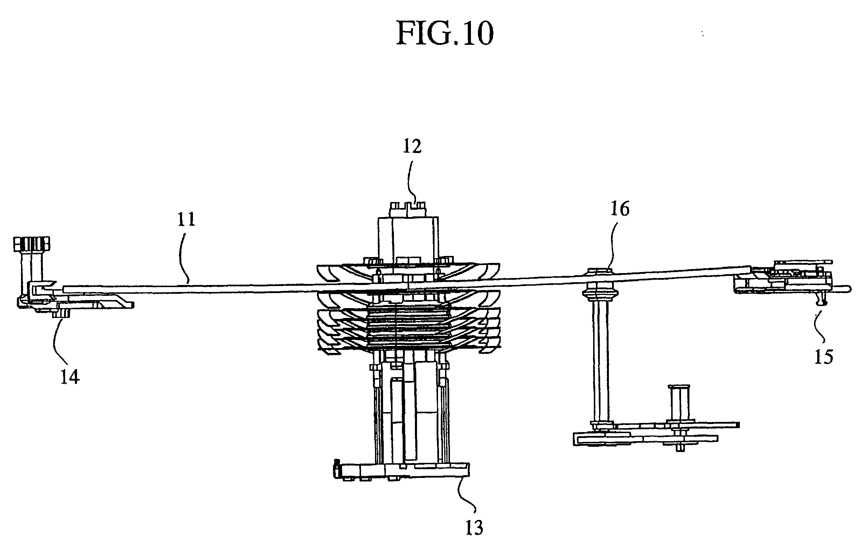

Fig. 10 is a side view to show a disk device in accordance with Embodiment 1 of the present invention.

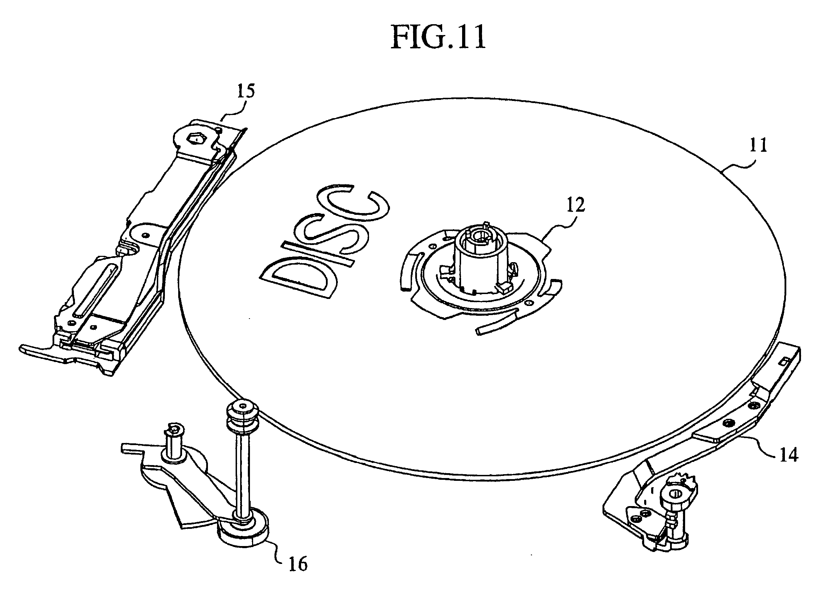

Fig. 11 is a perspective view to show a disk device in accordance with Embodiment 1 of the present invention.

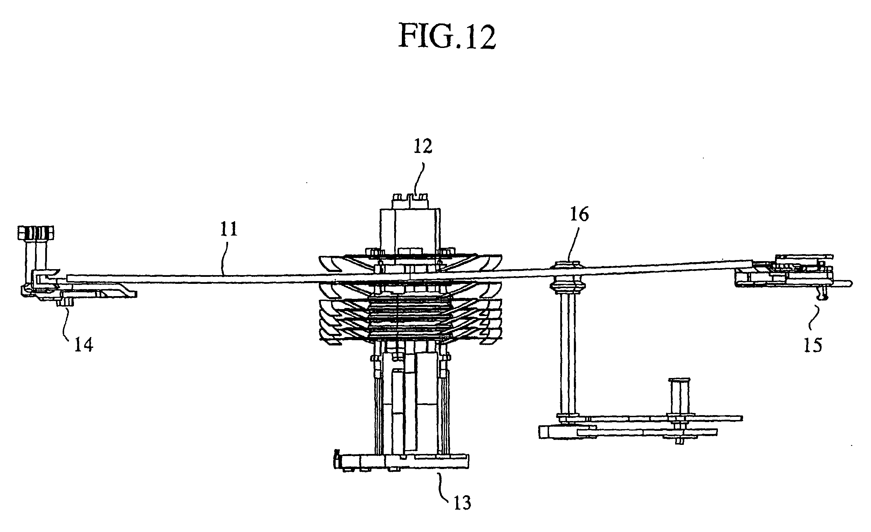

Fig. 12 is a side view to show a disk device in accordance with Embodiment 1 of the present invention.

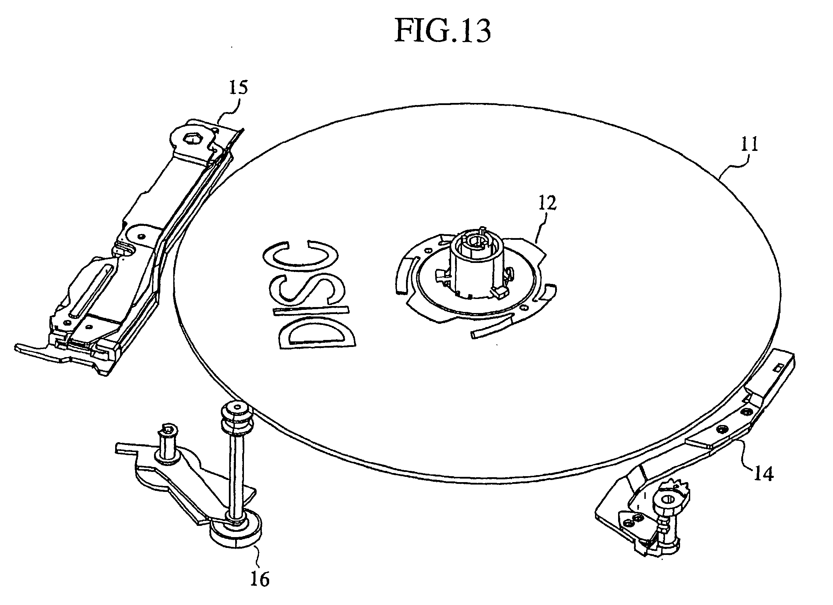

Fig. 13 is a perspective view to show a disk device in accordance with Embodiment 1 of the present invention.

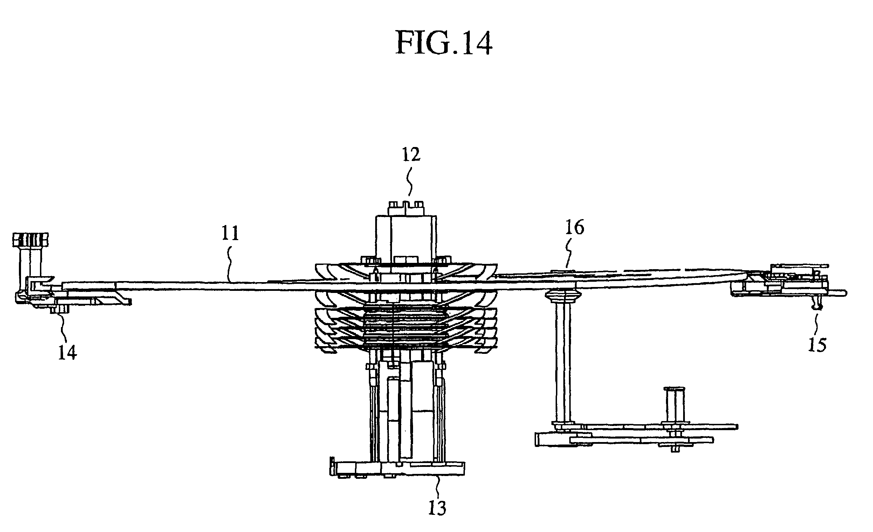

Fig. 14 is a side view to show a disk device in accordance with Embodiment 1 of the present invention.

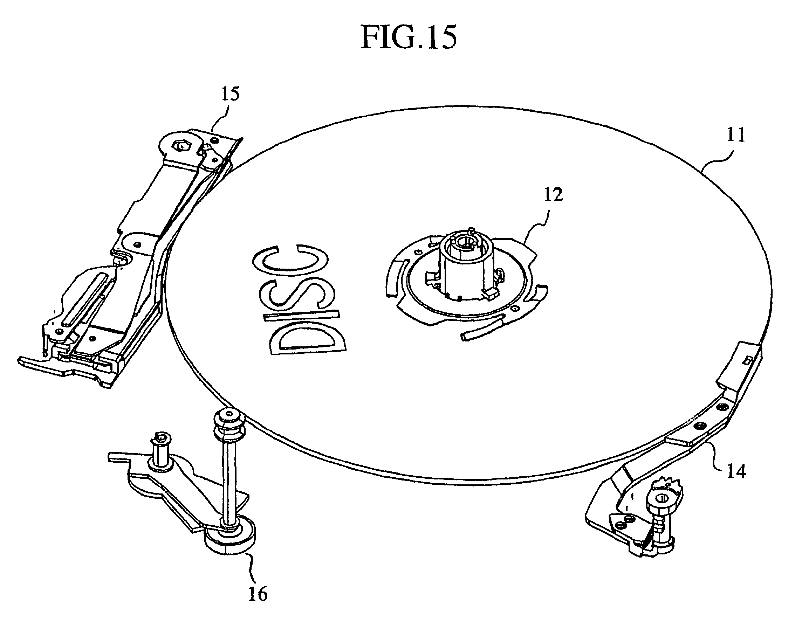

Fig. 15 is a perspective view to show a disk device in accordance with Embodiment 1 of the present invention.

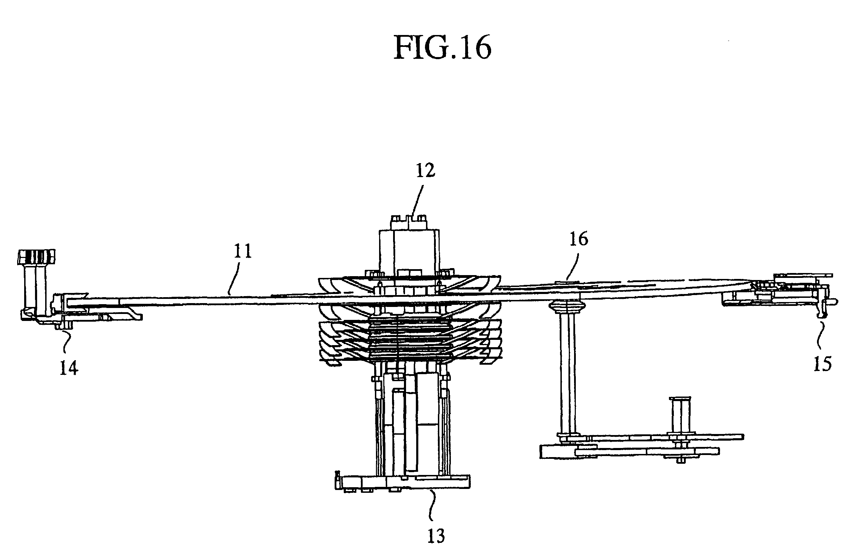

Fig. 16 is a side view to show a disk device in accordance with Embodiment 1 of the present invention.

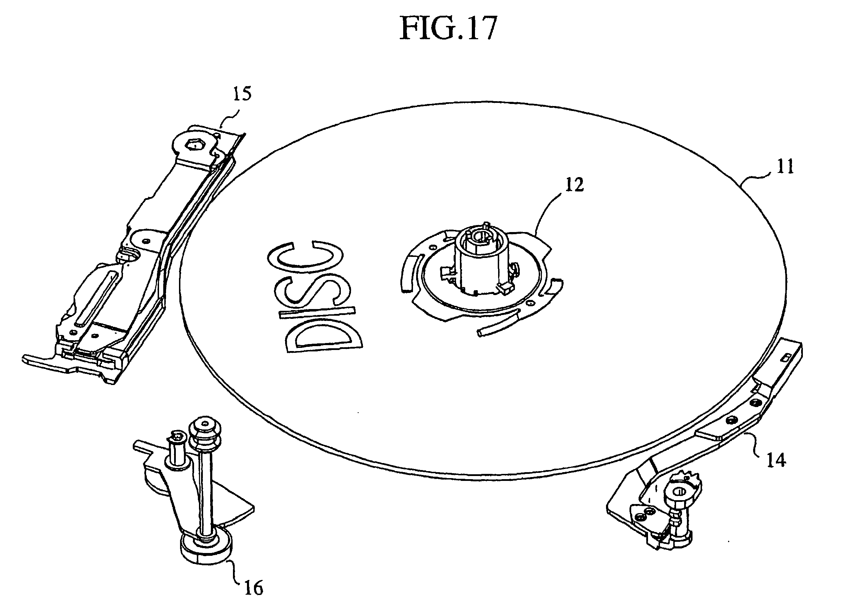

Fig. 17 is a perspective view to show a disk device in accordance with Embodiment 1 of the present invention.

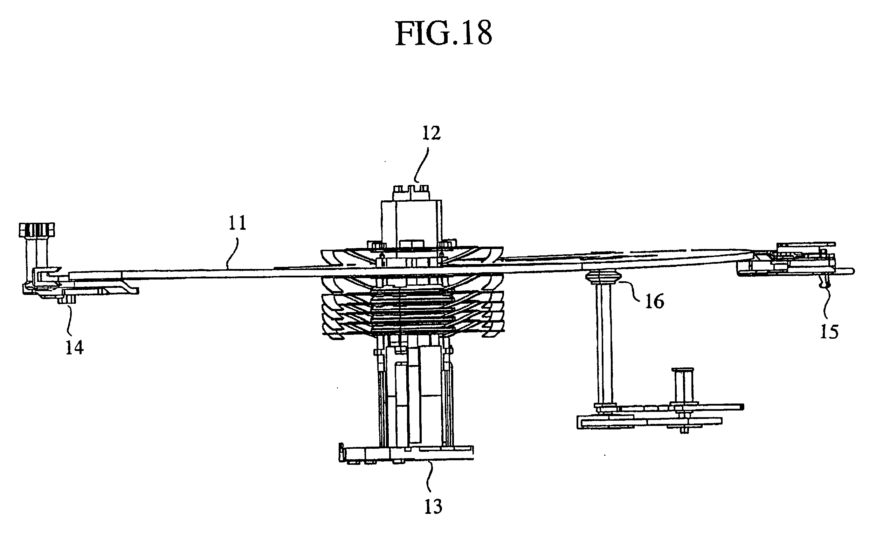

Fig. 18 is a side view to show a disk device in accordance with Embodiment 1 of the present invention.

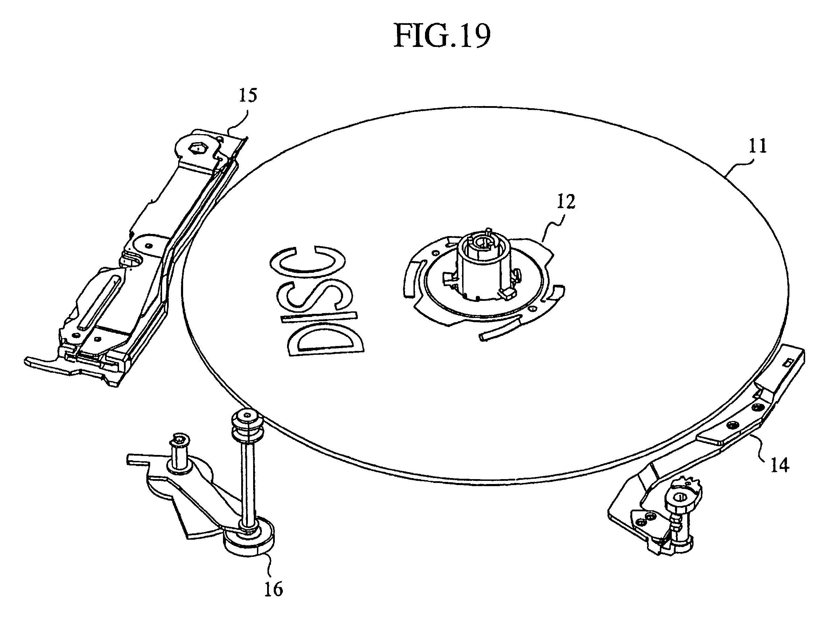

Fig. 19 is a perspective view to show a disk device in accordance with Embodiment 1 of the present invention.

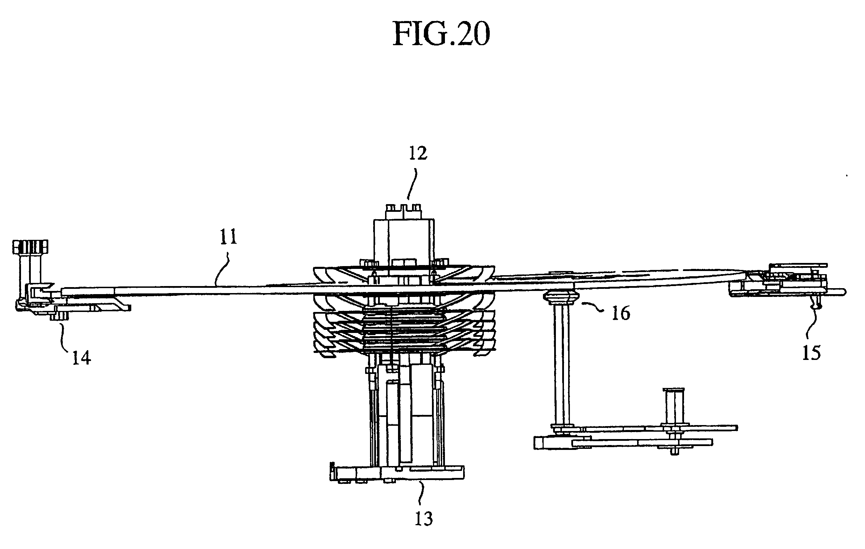

Fig. 20 is a side view to show a disk device in accordance with Embodiment 1 of the present invention.

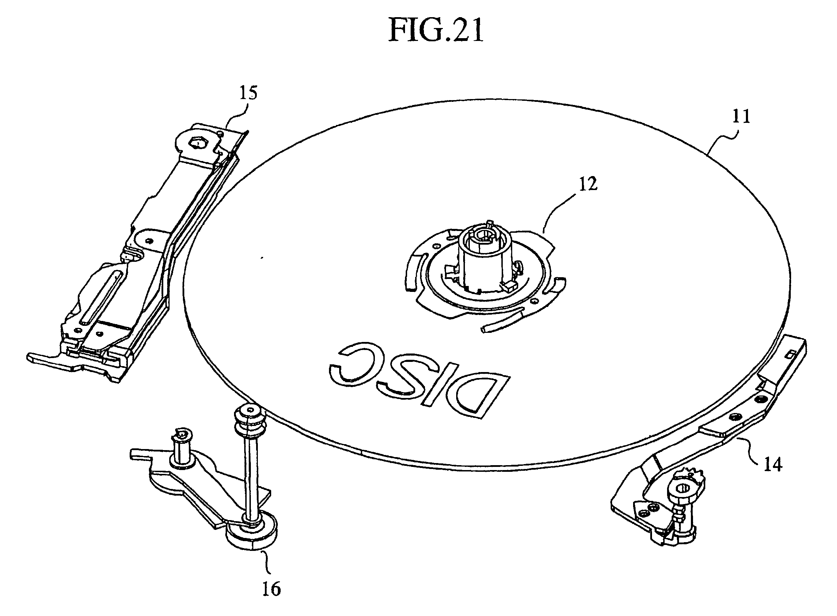

Fig. 21 is a perspective view to show a disk device in accordance with Embodiment 1 of the present invention.

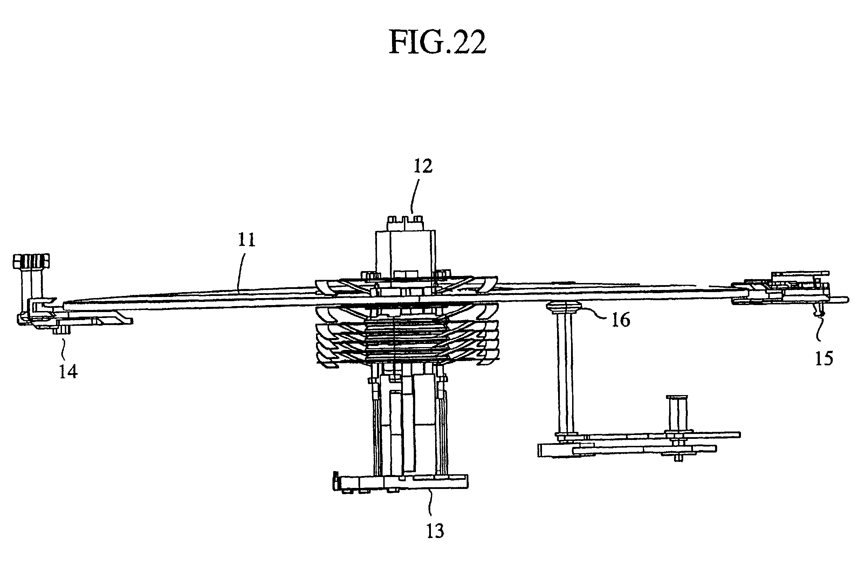

Fig. 22 is a side view to show a disk device in accordance with Embodiment 1 of the present invention.

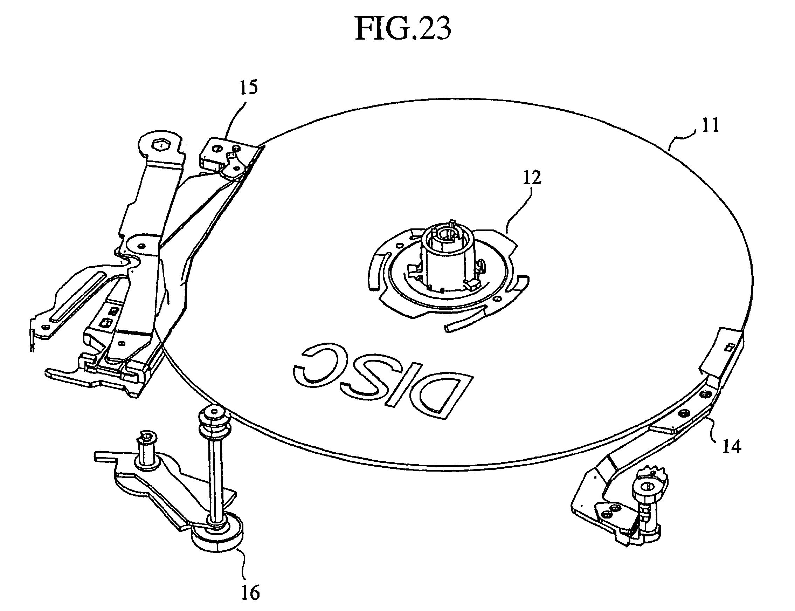

Fig. 23 is a perspective view to show a disk device in accordance with Embodiment 1 of the present invention.

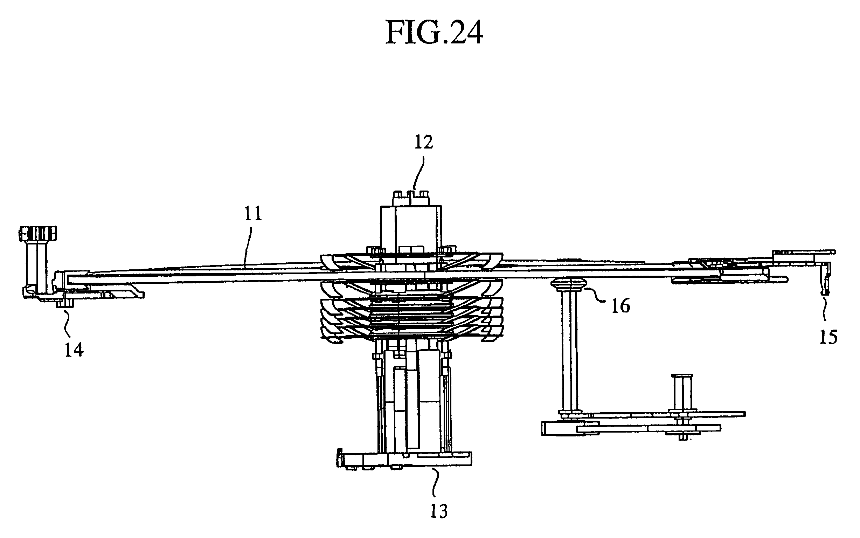

Fig. 24 is a side view to show a disk device in accordance with Embodiment 1 of the present invention.

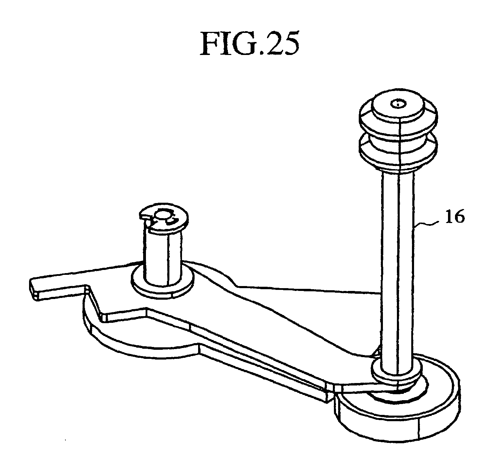

Fig. 25 is a perspective view to show a disk attitude stabilizing mechanism.

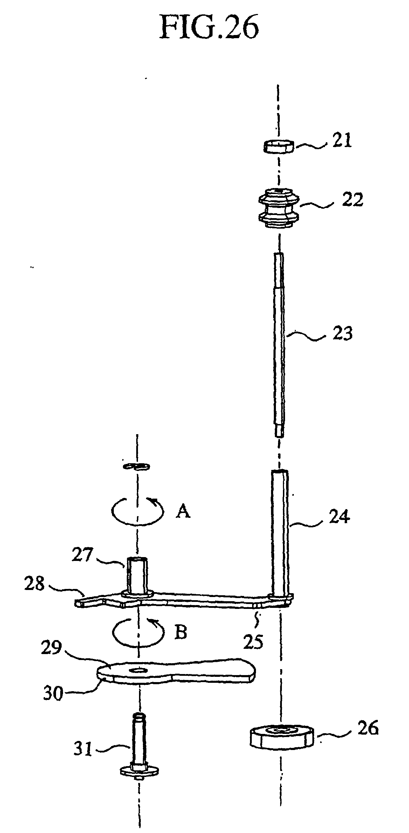

Fig. 26 is an exploded perspective view to show the disk attitude stabilizing mechanism in detail.

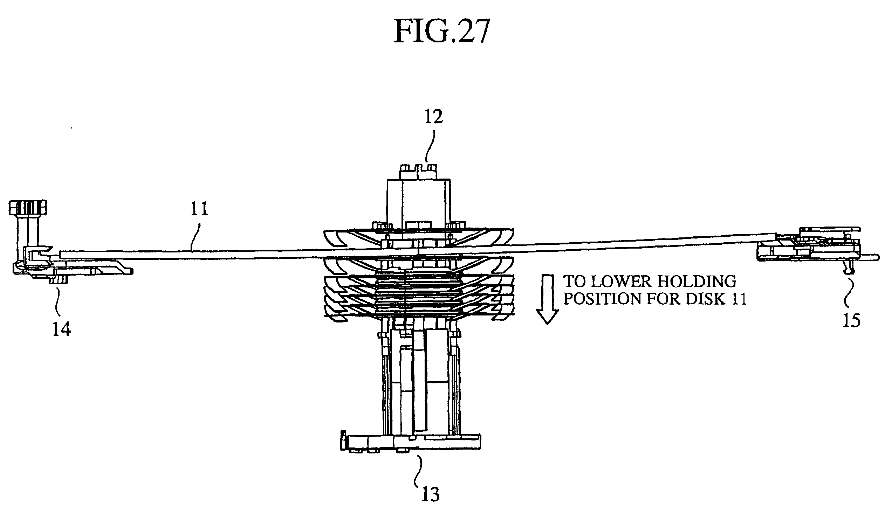

Fig. 27 is a side view to show a disk device in accordance with Embodiment 2 of the present invention.

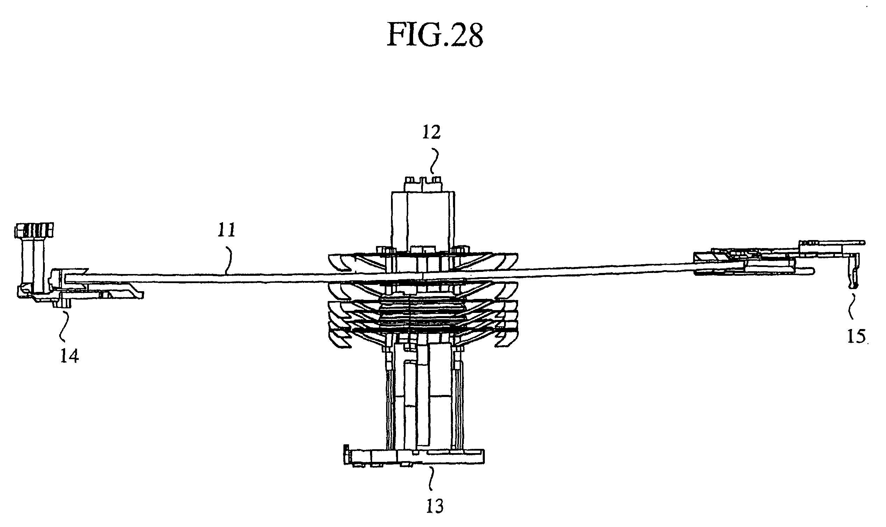

Fig. 28 is a side view to show a disk device in accordance with Embodiment 2 of the present invention.

### BEST MODE FOR CARRYING OUT THE INVENTION

For explaining the present invention in more detail, best modes for carrying out the invention will be described hereinafter with reference to the accompanied drawings.

### Embodiment 1

Fig. 8 is a perspective view to show a disk device in accordance with Embodiment 1 of the present invention (perspective view to show a state when a disk is not held on a shaft), Fig. 9 is a perspective view to show a disk device in accordance with Embodiment 1 of the present invention (perspective view to show a state when a disk is held on the shaft), and Fig. 10 is a side view to show a disk device in accordance with Embodiment 1 of the present invention.

In the drawings a reference numeral 11 designates a disk, 12 designates an upper shaft having spacers which hold at least one or more disks, and having a mechanism which moves an arbitrary disk 11 with a coupled operation of a lower shaft 13 to a position where a front arm 14 and a rear arm 15 can grip the disk, 13 designates a lower shaft having spacers which hold at least one or more disks, and having a mechanism which moves an arbitrary disk 11 with a coupled operation of the upper shaft 12 to the position where the front arm 14 and the rear arm 15 can grip the disk. At this point the disk holding mechanism is composed with the upper shaft 12 and the lower shaft 13.

A reference numeral 14 designates the front arm which swings from a direction of disk loading slot to grip the disk 11 and to carry the disk 11 to a turn table and the like, 15 designates a rear arm which swings from a counter direction side of the disk loading slot to grip the disk 11 and to carry the disk 11 to a turn table and the like and at the same time it judges whether the disk 11 is gripped at a predetermined normal position to detect a failure of a griping for disk 11. By means that a pushing switch (not shown) is arranged at a disk inserting portion of the rear arm, it is made possible to push the pushing switch by an end surface of the disk only when the disk is surely inserted and held by the rear arm. Accordingly when it is fail to grip the disk at the normal position, the pushing switch is not turned on.

By the above stated arrangement it is judged whether the disk is gripped at the normal position. At this point by the front arm 14 and the rear arm 15 the disk gripping mechanism is composed.

A reference numeral 16 designates a disk attitude stabilizing mechanism (rotating mechanism) to rotate the disk 11 when the front arm 14 or the rear arm 15 failed to grip the disk 11 while it abuts with an outer peripheral end surface of the disk 11 to stabilize an attitude of the disk 11 before the disk 11 is gripped by the front arm 14 and the rear arm 15.

Hereinafter an operation of the disk device will be explained.

When an arbitrary disk 11 is selected from more than one disks stored to reproduce and so on the disk, at first the upper shaft 12 and the lower shaft 13 move a disk 11 along a vertical direction to set the disk in a state that the front arm 14 and the rear arm 15 can grip the disk 11 (See Fig. 9 and Fig. 10).

Next the disk stabilizing mechanism 16 abuts onto an outer peripheral end surface of the disk 11 to stabilize an attitude of the disk 11 (See Fig. 11 and Fig. 12) , then it makes the disk 11 rotating in a predetermined angle (See Fig. 13 and Fig. 14).

And the front arm 14 swings from a direction of disk loading slot of the disk 11 and it grips the disk 11, at the same time the rear arm 15 swings from a counter direction of the disk loading slot of disk 11 to perform an operation griping the disk 11.

However in a case where the disk 11 is deformed as a warped disk, because the disk 11 is not positioned at a predetermined normal position, there is a possibility that the front arm 14 and the rear arm 15 cannot grip the disk 11.

In an example shown in Fig. 15 and Fig. 16 the rear arm 15 failed to hold the disk 11.

In such a case the rear arm 15 judges whether the disk 11 is gripped at the normal position or not, and when a failure of griping the disk 11 is detected, in order to retry a griping of disk 11, after the disk attitude stabilizing mechanism moves apart once from the disk 11 (See Fig. 17 and Fig. 18), the disk attitude stabilizing mechanism 16 abuts again the outer peripheral surface of the disk 11 to stabilize the attitude of disk 11 (See Fig. 19 and Fig. 20), then, it makes the disk 11 rotating in a predetermined angle (See Fig. 21 and Fig. 22).

And the same as previous operation when the front arm 14 swings from the direction of disk loading slot of disk 11 to grip the disk 11, at the same time the rear arm 15 swings from the counter direction of disk loading slot of disk 11 to grip the disk 11, because it cause them to grip a different portion of the disk 11, even when they could not succeed to grip the disk 11 in the previous operation, a possibility to succeed griping the disk 11 can be raised.

When the disk 11 cannot be held still even in the second trial the trial operation is continued repeatedly.

At this point as a disk rotating mechanism by the disk attitude stabilizing mechanism 16, it is possible to propose as described below.

In Fig. 25 and Fig. 26 a reference numeral 21 designates a rubber roller which abuts directly with the disk 11 to rotate it, 22 designates a holder to hold the rubber roller 21, 23 designates a shaft which is pressed into the holder 22 to transfer a rotating force to the rubber roller 21 and the holder 22, 24 designates a guiding pin to hold the shaft 23, 25 designates a plate which has the guiding pin 24 and a guiding pin 27, 26 designates a gear to transfer a rotating force to the rubber roller 21 and the like, 27 designates the guiding pin, 28 designates an end surface of the plate 25, 29 designates a lever which receives a driving force from other mechanism to transfer the rotating force to the gear 26, 30 designates a gear portion of the lever 29 and 31 designates a pin which holds rotatably the lever 29 and the plate 25.

As an operation a lever which is not shown in the drawing pushes the end surface 28 of plate 25, the plate 25 is made to swing also in A direction.

By this movement the rubber roller 21 is also made to swing in A direction and abuts with the disk 11 which is put at a same height as the rubber roller 21.

Further because the gear portion 30 of lever 29 engages with a gear which is not shown in the drawing, when the gear rotates the lever 29 swings in B direction depicted by an arrow and makes the gear 26 to be rotated thereby the rubber roller 21 which is jointed by the shaft 23 is made to rotate.

By this movement the disk can be rotated because the rubber roller 21 abuts with end surface of the disk 11.

As it becomes apparent by the above description, the disk device in accordance with Embodiment 1 of the present invention brings about an effect that the disk 11 can be surely held even when the disk 11 is deformed at its surface and miniaturization of the disk device can be realized without having a damage on the disk because the desk device is constituted to includes the disk attitude stabilizing mechanism 16 which rotates the disk 11 to retry the griping operation of the disk 11 when the front arm 14 or the rear arm 15 fails to grip the disk 11.

### Embodiment 2

Though the above described Embodiment 1 is explained about a disk device in which the retry operation is achieved after the disk 11 is rotated in a predetermined angle when the front arm 14 or the rear arm 15 fail to grip the disk 11, it is also recommendable that the retry operation is achieved after the upper shaft 12 and the lower shaft 13 shift upwardly or downwardly the holding position of disk 11 in a predetermined amount as shown in Fig. 27 when the front arm 14 or the rear arm 15 fail to grip the disk 11 (See Fig. 28).

By this arrangement it is produced an effect that the disk 11 is surely held even when the disk 11 is damaged at its surface.

### Industrial Applicability

As set forth above, the disk device in accordance with the present invention is suitable for the disk device in which it is required that a disk is surely held to carry to the turn table and the like when an arbitrary disk is selected from more than one disk stored, and the disk is deformed at its surface.

## Claims

1. A disk device comprising:
a disk holding mechanism (12, 13) which stores at least more than one disk;
a disk griping mechanism (14, 15) which grips an arbitrary disk stored in said disk holding mechanism (12, 13) to carry the disk to a predetermined position;
a rotating mechanism (16) which rotates the disk when said disk griping mechanism (13, 14) fails to grip the disk and retries a griping operation of the disk.

2. The disk device according to claim 1 **characterized by** that said rotating mechanism (16) rotates the disk in a predetermined angle.

3. The disk device according to claim 1 **characterized by** that said rotating mechanism (16) continuously achieves a rotating operation until the disk griping mechanism (14, 15) succeed to grip the disk.

4. A disk device comprising:
a disk holding mechanism (12, 13) which stores at least more than one disk; and
a disk griping mechanism (14, 15) which grips an arbitrary disk stored in said disk holding mechanism (12, 13) to carry the disk to a predetermined position, **characterized by** that
said disk holdingmechanism (12, 13) shifts a disk holding position upwardly or downwardly when said disk griping mechanism (14, 15) fails to grip the disk and retries a griping operation of the disk.

5. The disk device according to claim 4 **characterized by** that said disk holding mechanism (12, 13) shifts the disk in a predetermined amount.

6. The disk device according to claim 4 **characterized by** that said disk holding mechanism (12, 13) continuously achieves a shifting operation until the disk griping mechanism (14, 15) succeed to grip the disk.
